# EUROPEAN PATENT SPECIFICATION

(11) **EP 2 192 513 B1**
(45) Date of publication and mention of the grant of the patent: **29.10.2014**
(21) Application number: 08170410.8
(22) Date of filing: 01.12.2008
(51) Int. Cl.: G06F 21/32, G06F 21/34, G06F 21/83

(54) **Authentication using stored biometric data**
Authentifizierung unter Verwendung von gespeicherten biometrischen Daten
Authentification en utilisant des données biométriques stockées

(43) Date of publication of application: 02.06.2010
(60) Divisional application: 13153281.4
(73) Proprietor: BlackBerry Limited, Waterloo, ON N2K 0A7 (CA)
(72) Inventor: Adams, Neil P., Waterloo Ontario N2L 5Z5 (CA); Brown, Michael K, Waterloo Ontario N2L 3L3 (CA); Singh, Ravi, Waterloo Ontario N2L 5Z5 (CA)
(74) Representative: Patel, Binesh

(56) References cited:
- EP-A- 1 265 121
- EP-A- 1 650 631
- WO-A-2004/015620
- FR-A- 2 867 002
- GB-A- 2 346 239
- GB-A- 2 409 557
- US-A1- 2002 069 361
- US-B1- 6 718 468

## Description

The following description relates, generally, to authentication using biometric data and relates, more specifically, to a system and method for authentication using stored biometric data.

Computing devices, which have been ubiquitous for years, are increasingly becoming critical tools to professionals and employees at all levels and in all positions. Government employees, researchers, law enforcement, national security and intelligence officers, and military personnel rely heavily on technology to perform their jobs. However, people in these roles must be able to rely on their computing devices to provide a secure system of information storage that is not susceptible to intrusion by outsiders or unauthorized users. Biometric authentication is often considered for providing secure access to computing devices in use by people in such roles.

Biometric authentication relates to automatically and uniquely recognizing humans based upon one or more intrinsic physical or behavioral traits. Biometric authentication often involves technologies that measure and analyze human physical and behavioral characteristics. Examples of physical characteristics include fingerprints, retinas, irises, facial patterns and hand measurements, while examples of mostly behavioral characteristics include signature, gait and typing patterns. Voice is considered a mix of both physical and behavioral characteristics.

To obtain access to a secure device, a user provides a candidate physical characteristic (a biometric candidate). Authenticating the user involves comparing the biometric candidate to a previously recorded, corresponding biometric template. To facilitate this comparison, the previously recorded, corresponding biometric entry may be digitized and stored as the biometric template. Additionally, collection of a biometric candidate from the user involves obtaining a digital representation of one or more physical characteristics of the user.

In many instances, the device that obtains a biometric candidate is different from the device that uses the biometric candidate to authenticate a user and these devices may be distinct from a further device that stores biometric templates necessary for comparison during authentication.

A smart card generally comprises a pocket-sized card with an embedded integrated circuit that can process information. Smart cards provide storage of user and account identity and, as such, smart cards often provide storage of biometric templates.
EP 1 265 121 relates to a fingerprint authentication unit and an authentication system which can use one apparatus having a fingerprint collation function to thereby manage and operate a plurality of types of apparatuses or applications. By the fingerprint authentication unit, fingerprint data of a plurality of fingers of the same person is registered and stored in an IC card section, so that a collation control section compares and collates fingerprint data detected by a fingerprint sensor with the registered fingerprint data at a requested collation level corresponding to a security level of the application and, when the user is authenticated, a common control section obtains from a FACCT a key necessary to access a file which stores therein data to be output corresponding to the contents of the application; which key is in turn decrypted with an encryption key of a MF at an IC Card CPU and used to authorize access to the file in order to the data in this file to the application.
GB 2 409 557 relates to methods in a computing device (e.g. computer, communications device, any electrical device including data recording and/or playback device). When a user requests to carry out an operation, the device determines the type of operation requested, and the time period since the user was last authenticated, using e.g. a pass phrase, password, PIN, and/or biometric data. The operation is enabled only if the determined time period does not exceed a threshold for the requested operation. Otherwise, the user is requested to re-authenticate. Thus for a relatively low level secure operation such as reading of email, a pass phrase caching period of, say one hour, may be acceptable; for a high level secure operation such as approving a purchase contract, the pass phrase caching period may be shorter, say three minutes, or may expire upon the completion of the previous operation of the same type.
WO2004/015620 A relates to an autonomous and portable smartcard reader device which incorporates a high level of embedded security countermeasures. Data transfers are encrypted with specific input devices, namely a light sensor/DTMF/infrared and PIN or other keyboard entry, and at the output through the use of a dual-tone encoder-decoder. The unit may be used alone or as a plug-in to another device such as a PDA, cell phone, or remote control. The reader may further be coupled to various biometric or plug-in devices to achieve at least five levels of authentication, namely, the smartcard itself; the smartcard reader; the PIN; private-key cryptography (PKI); and the (optional) biometric device. These five levels account for an extremely strong authentication applicable to public networking on public/private computers, and even on TV (satellite, cable, DVD, CD AUDIO, software applications.; Transactions including payments may be carried out without any risk of communication tampering, authentication misconduct or identity theft. In essence, the device is a closed box with communication ports. The emulation of the device is therefore extremely complex due to the fact that it involves PKI, hardware serialization for communication and software implementation, in conjunction with a specific hardware embodiment and service usage infrastructure component that returns a response necessary for each unique transaction link to an atomic time synchronization.
US 6 718 468 relates to a method for associating a password with a secured public/private key pair. A user public/private key pair is first established for a user. The user public/private key pair includes a user public key and a user private key. Then, the user public/private key pair is encrypted along with a random password, utilizing a chip public key. Next, a first password is generated by hashing a pass phrase. Finally, the random password is encrypted along with the first password, also utilizing the chip public key. As a result, a user can assess the user private key to perform an authentication function by providing the pass phrase.

### GENERAL

By storing, in a cache, an extracted biometric template during execution of an authentication process, subsequent executions of the authentication process may be made more efficient. In particular, it may be considered that a retrieval, from the cache, of the biometric template is more efficient than an extraction, from the smart card, of the biometric template

In accordance with an embodiment, there may be provided a computer implemented method of processing a biometric template stored on a smart card for use on a user computing device. The method may comprise retrieving the biometric template from the smart card using a smart card reader, encrypting the biometric template using a content protection key to form an encrypted biometric template and encrypting the content protection key using at least one of a device password or a smart card password to form an encrypted content protection key. The method may also comprise generating a hash of at least one of the device password or the smart card password and storing, in a cache, the encrypted biometric template, the encrypted content protection key and the hash.

The cache may be located on the smart card reader.

The cache may be located on the user computing device.

The method may further comprise clearing the cache in accordance with at least one predefined rule.

The method may further comprise clearing the cache responsive to determining that a triggering event has occurred, where the triggering event may comprise: a termination of a connection between the smart card reader and the user computing device; a termination of a communicable coupling between the smart card and the smart card reader; an exceeding of a predefined number of cache accesses; or an exceeding of a predefined duration of time.

The biometric template may comprise a fingerprint template.

The method may further comprise performing the encrypting the content protection key by: using a device password; using a smart card password; or transmitting, to the smart card via the smart card reader, the content protection key and receiving, from the smart card via the smart card reader, the encrypted content protection key, wherein the content protection key has been encrypted by the smart card using a private key.

The method may further comprise performing the encrypting the content protection key using an additional key, transmitting, to the smart card via the smart card reader, the additional key, receiving, from the smart card via the smart card reader, an encrypted additional key, wherein the additional key has been encrypted by the smart card using a private key and storing, in the cache, the encrypted additional key.

The method may further comprise generating a hash of the at least one of the device password or the smart card password and storing, in the cache, the hash.

In other aspects of the present application, a computing device may be provided for carrying out this method and a computer readable medium is provided for adapting a processor in a computing device to carry out this method.

In accordance with an alternate embodiment, there may be provided a method for authenticating a user in order to provide the user with access to a user computing device. The method may comprise obtaining at least one of a device password or a smart card password from the user, obtaining a biometric scan from the user, retrieving, from a cache, an encrypted biometric template, an encrypted content protection key and a hash of at least one of the device password or the smart card password and verifying at least one of the device password or the smart card password against the hash. The method may also comprise using at least one of the device password or the smart card password to decrypt the encrypted content protection key to form a decrypted content protection key, using the decrypted content protection key to decrypt the encrypted biometric template to form a decrypted biometric template, comparing the biometric scan with the decrypted biometric template and, if the biometric scan matches the decrypted biometric template, providing the user with access to the user computing device.

The method may further comprise, responsive to determining that the biometric scan does not match the decrypted biometric template, zeroizing the decrypted biometric template and the content protection key.

The method may further comprise obtaining a biometric template from a smart card if the encrypted biometric template does not exist in the cache.

The method may further comprise, responsive to determining that the biometric scan does not match the decrypted biometric template, obtaining a further biometric scan from the user.

The method may further comprise, responsive to determining that a number of further biometric scans has exceeded a predefined number, discontinuing the obtaining the further biometric scans.

The decrypted biometric template may comprise a fingerprint template.

The method may further comprise performing the decrypting using the at least one of the device password or the smart card password.

The method may further comprise retrieving, from the cache, a hash of the at least one of the device password or the smart card password and performing the verifying the at least one of the device password or the smart card password against the hash.

The method may be implemented on a smart card reader or on the user computing device.

In other aspects of the present application, a computing device is provided for carrying out this method and a computer readable medium is provided for adapting a processor in a computing device to carry out this method.

### BRIEF DESCRIPTION OF THE DRAWINGS

Embodiments will now be described by way of example only with reference to the following drawings in which:
FIG. 1 illustrates a block diagram of a smart card infrastructure including a user computing device a smart card and a smart card reader;
FIG. 2 illustrates steps in an example method involving obtaining a biometric template from the smart card of FIG. 1 and storing the biometric template;
FIG. 3 illustrates steps in an example method involving encrypting a biometric template for storing; and
FIG. 4 illustrates steps in an example method involving using a previously stored biometric template to access the user computing device of FIG. 1.

### DESCRIPTION OF THE PREFERRED EMBODIMENTS

As part of an example authentication process, a smart card reader may extract a fingerprint template from a smart card. The smart card reader may then transmit the fingerprint template to a device access to which is to be authenticated. The device may further receive a candidate fingerprint and compare the candidate fingerprint to the fingerprint template. Given that it is desirable to provide a more efficient system and method for using smart cards in biometric authentication, each element of the authentication process may come under scrutiny.

The following description makes reference to biometric data. For clarity, the term biometric template is used herein to generally relate to reference biometric data stored on and/or extracted from a smart card. The term biometric scan is used herein to generally relate to biometric data obtained from the user for comparison with the biometric template.

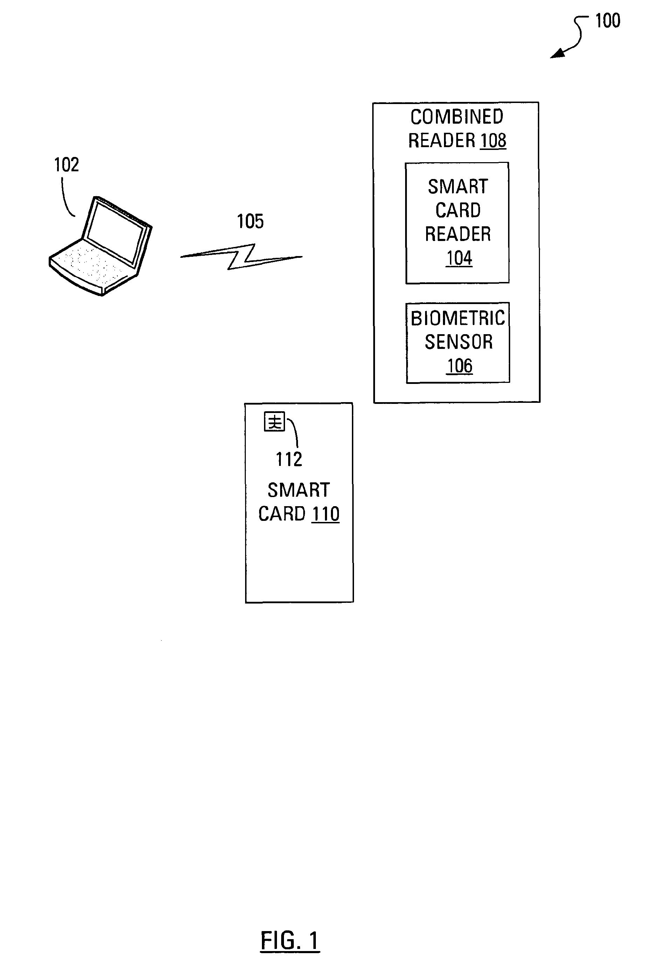

For convenience, like numerals in the description refer to like structures in the drawings. Referring to FIG. 1, a wireless smart card infrastructure is illustrated generally by numeral 100. The smart card infrastructure 100 includes a user computing device 102, a smart card reader 104 and a biometric sensor 106. In the present embodiment, the smart card reader 104 and the biometric sensor 106 are integrated into a single device referred to as a combined reader 108. A smart card 110 includes an integrated circuit 112 for storing data such as a password and a biometric template. In the present embodiment the biometric template is a fingerprint template and the biometric sensor 106 is a fingerprint scanner. There exist many form factors for fingerprint input devices. One example fingerprint input device has a bar shape. A silicon sensor records a plurality of images as a user swipes a finger across the bar. The silicon sensor then constructs an image of the finger from the plurality of images outputs the image of the finger as a fingerprint. Another example fingerprint input device has a pad shape. A sensor records an image as a user holds a finger on the pad, which is designed with a size to accommodate an entire fingerprint. The sensor then outputs the image of the finger as a fingerprint.

The user computing device 102 may be one of a number of different user computing devices which, in the present embodiment, requires authentication of a user before allowing access. Example of user computing devices include personal computers, workstations, network servers, notebooks, smart phones (such as a BlackBerry® smart phone), personal digital assistants (i.e., a "PDA" such as a Treo® PDA) and the like. The user computing device 102 communicates with the combined reader 108 via a communication link 105. In the present embodiment, the communication link 105 is a wireless communication link using the Bluetooth^{™} communication protocol. However, other wireless communication protocols, such as Wi-Fi, may also be used. Indeed, the communication link 105 may also be a wired communication link using, for example, the Universal Serial Bus (USB) standard.

In preparation for use, the smart card 110 is communicably coupled to the smart card reader 104 for communication therebetween. In some embodiments, the smart card 110 may be a so-called "contact" smart card, which is inserted into a physical interface of the smart card reader 104. In such a case, there is a physical coupling of the smart card 110 to the smart card reader 104. In other embodiments, the smart card 110 may be a so-called "contactless" smart card, which is coupled to the smart card reader 104 over a wireless interface.

In typical operation, responsive to, say, an authentication request, the combined reader 108 accesses a fingerprint template on the smart card 110. The combined reader 108 transmits the fingerprint template to the user computing device 102 via the communication link 105 and waits for the user to provide a finger. The user provides a finger to the fingerprint scanner 106, thus prompting the fingerprint scanner 106 to generate a fingerprint scan. Upon receipt of the fingerprint scan from the fingerprint scanner 106, the combined reader 108 transmits the fingerprint scan to the user computing device 102 via the communication link 105. The user computing device 102 then compares the fingerprint scan to the fingerprint template and considers that the user has been authenticated if the fingerprint template and the fingerprint scan match. Responsive to authenticating the user, the user computing device 102 provides the user access to itself.

In accordance with the present embodiment, the user computing device 102 is configured to store, in a cache, the fingerprint template received from the combined reader 108. Therefore, the fingerprint template is temporarily stored on the user computing device 102. Storing the fingerprint template allows the authentication process to be improved, as the fingerprint template does not have to be extracted from the smart card 110 each time the user wishes to access the user computing device 102. However, steps need to be taken to secure the fingerprint template while fingerprint template is stored at the user computing device 102.

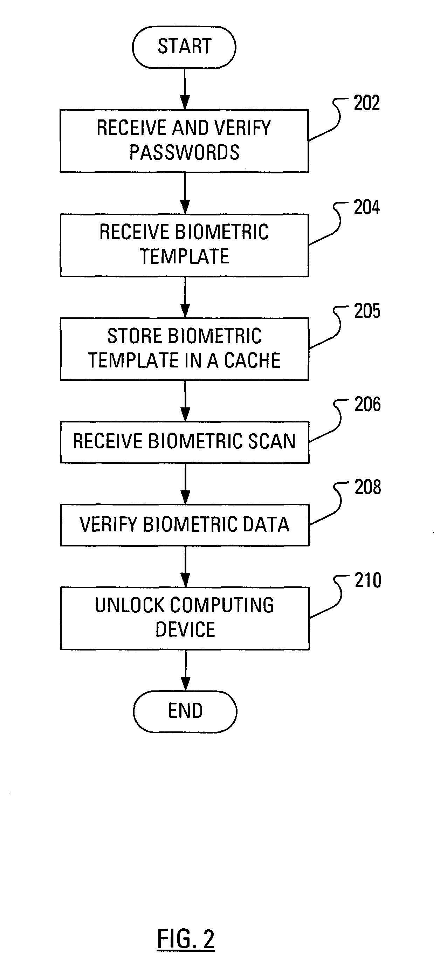

FIG. 2 illustrates example steps in a method for obtaining and storing the fingerprint template on the user computing device 102. Securely obtaining a fingerprint template from the combined reader 108 is beyond the scope of the present invention and, thus, will not be described in detail. Any one of a plurality of known or proprietary methods may be used. Accordingly, it will be appreciated that some of the following steps are merely described for exemplary purposes.

At step 202, the user computing device 102 subjects the user to a verification process responsive to a user attempt to access, or unlock, the user computing device 102. Specifically, the user computing device 102 prompts the user for a device password and a smart card password. The device password is a password assigned to the user computing device 102 and the smart card password is a password assigned to the smart card 110. Responsive the prompting, the user provides a device password and a smart card password. While it is expected that the user will provide the device password directly on the user computing device 102, the user may provide the smart card password on the user computing device 102. Alternatively, if the smart card reader 104 is appropriately equipped with a user interface capable of accepting password entry, the user may provide the smart card password on the smart card reader 104. The user computing device 102 verifies the device password first. Such verification generally involves comparing a hash of the provided device password to a stored hash of a device password. Assuming that the device password is verified, the user computing device 102 transmits, to the smart card reader 104, a request for one or more fingerprint templates. The request may include the smart card password provided by the user. Responsive to receiving the request, the smart card reader 104 provides the smart card password to the smart card 110, retrieves the one or more fingerprint templates from the smart card 110 and transmits the one or more fingerprint templates to the user computing device 102.

At step 204, the user computing device 102 receives the extracted one or more fingerprint templates. Responsive to receiving the one or more fingerprint templates, at step 205, the user computing device 102 stores the one or more fingerprint templates in a cache.

The user computing device 102 may then prompt the user to provide a finger to the biometric sensor 106. The biometric sensor 106 may then obtain a fingerprint scan from the provided finger and transmit the fingerprint scan to the user computing device 102. The prompting of the user may be carried out in parallel with extracting the fingerprints with the requesting of the one or more fingerprint templates.

At step 206, the user computing device 102 receives the fingerprint scan. At step 208, the user computing device 102 verifies the fingerprint scan against the fingerprint template. Optionally, step 205 may be delayed so that the fingerprint template is only stored on the condition that the fingerprint scan is determined to be a match for the fingerprint template.

At step 210, responsive to determining that the fingerprint scan is a match for the fingerprint template, the user computing device 102 unlocks itself.

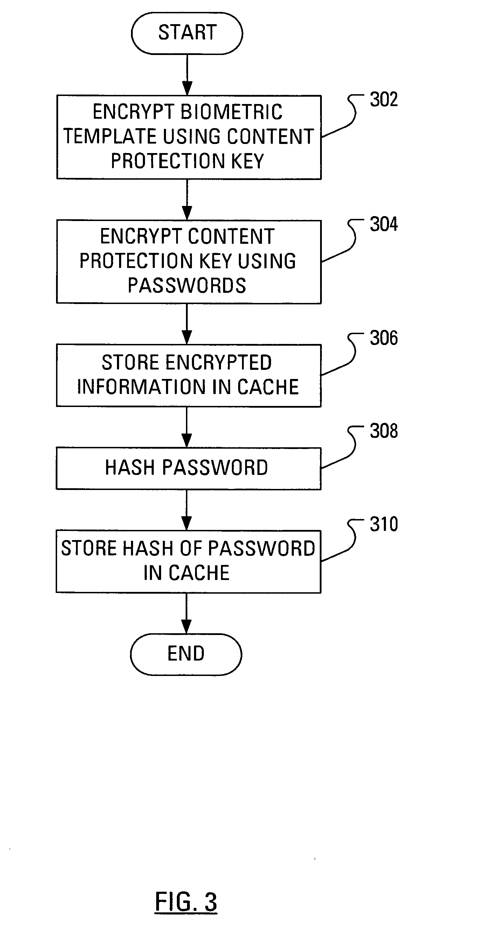

Additional measures may be taken to protect the stored fingerprint template to address security concerns that include concerns regarding vulnerability to hardware-based attacks. Example additional measures are discussed in the following, with reference to FIG. 3, which illustrates steps in an example method of encrypting a biometric template and then storing, in the cache, the encrypted biometric template.

In cryptography, encryption is the process of transforming information using an algorithm to make the information unreadable to anyone except those possessing special knowledge. The result of the process is encrypted information. In the present context, the information is the biometric template and the special knowledge is a predefined content protection key. An algorithm for the encryption of the biometric template is not specified herein, as such algorithms are many and varied. Encryption algorithms can be highly complex and correspondingly secure, but may be considered relatively slow. In contrast, less complex encryption algorithms are less secure, but are relatively fast and offer speed of execution benefits. The selection of a specific encryption algorithm is left to those implementing aspects of the present disclosure.

At step 302, the user computing device 102 encrypts the fingerprint template using the predefined content protection key. At step 304, the user computing device 102 encrypts the content protection key using the device password. Optionally, the user computing device 102 may encrypt the content protection key using the smart card password as well as the device password, thereby providing a greater degree of security. Even further optionally, the user computing device 102 may encrypt the content protection key using the smart card password instead of the device password.

It will be appreciated that, at this point, the user computing device 102 will have previously received the smart card password. Indeed, the user computing device 102 would have provided the smart card password to the smart card reader 104 so that the smart card password could be verified by the smart card 110 before the smart card reader 104 was allowed to extract the fingerprint template from the smart card 110.

As a further fingerprint template encryption alternative, the user computing device 102 may transmit the content protection key to the smart card 110 via the smart card reader 104 for encryption, by the smart card 110, using a public key corresponding to a private key stored on the smart card 110.

Even further alternatively, the user computing device 102 may use an additional key to encrypt the content protection key. Subsequently, the user computing device 102 may transmit the additional key to the smart card 110 via the smart card reader 104. The smart card 110 may use the public key to encrypt the additional key and return the encrypted additional key to the user computing device 102 via the smart card reader 104.

At step 306, the user computing device 102 stores the encrypted fingerprint template and the encrypted content protection key in the cache. If an encrypted additional key has been received, the user computing device 102 may also store the encrypted additional key in a persistent key store.

At step 308, the user computing device 102 generates a hash of the device password and, at step 310, the user computing device 102 stores the hash in the cache.

Generating a hash of a password involves processing the password with a hash function. A hash function is any well-defined procedure or mathematical function for turning some kind of data into a relatively small integer. The value returned by a hash function may be called a "hash value", a "hash code", a "hash sum" or, simply, a "hash". A set of cryptographic hash functions ("the SHA hash functions") have been designed by the United States National Security Agency (NSA) and published by the National Institute of Standards and Technology (NIST), as U.S. Federal Information Processing Standards. SHA stands for Secure Hash Algorithm. Five of the algorithms are denoted SHA-1, SHA-224, SHA-256, SHA-384 and SHA-512.

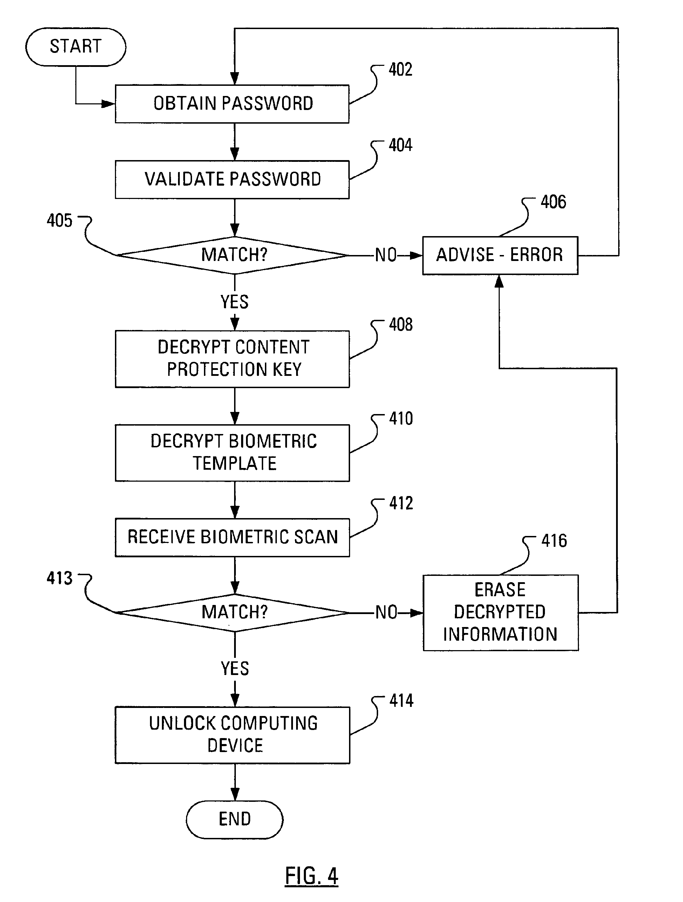

Once the fingerprint template is stored in the cache on the user computing device 102, the fingerprint template can be retrieved more efficiently than if the fingerprint template had to be retrieved from the smart card 110. FIG. 4 illustrates a flowchart illustrating steps in an example method involving using a previously stored biometric template to access a user computing device.

At step 402, the user computing device 102 prompts the user for the device password and receives a password submitted by the user. At step 404, the user computing device 102 generates a hash (a "submitted device hash") from the password submitted by the user. The user computing device 102 compares the submitted device hash to the hash of the device password (a "stored device hash") stored in the cache on the user computing device 102.

If the user computing device 102 determines that the submitted device hash does not match the stored device hash, then, at step 406, the user computing device 102 advises the user of an error and processing returns to step 402. If the user computing device 102 determines that the submitted device hash matches the stored device hash, then, at step 408, the user computing device 102 uses the device password to decrypt the content protection key. At step 410, the user computing device 102 uses the content protection key to decrypt the encrypted fingerprint template.

The user computing device 102 prompts the user to provide a fingerprint to the fingerprint scanner 106. The fingerprint scanner 106 forms a fingerprint scan from the provided fingerprint and the combined reader 108 transmits the fingerprint scan to the user computing device 102. Upon receipt of the fingerprint scan, at step 412, the user computing device 102 compares the fingerprint scan with the fingerprint template that was decrypted in step 410. If the user computing device 102 determines (step 413) that the fingerprint scan matches the fingerprint template, then, at step 414, the user computing device 102 unlocks itself.

If the user computing device 102 determines that the fingerprint scan does not match the fingerprint template, then, at step 416, the user computing device 102 zeroizes the decrypted content protection key and the decrypted fingerprint template. Subsequent to the zeroizing, at step 406, the user computing device 102 advises the user of an error and processing returns to step 402. As will be appreciated by a person of ordinary skill in the art, the user computing device 102 may limit the number of attempts that the user may make to match the fingerprint scan with the fingerprint template.

The term "to zeroize" as used and conjugated herein is intended to denote rendering a value useless. For instance, to zeroize the decrypted content protection key may mean replacing all of the characters of the decrypted content protection key with zeroes. Indeed, there may be other ways to rendering the decrypted content protection key useless, for example, replacing all of the characters of the decrypted content protection key with another single character or scrambling the characters of the decrypted content protection key in an unpredictable and irreversible manner.

Notably, upon validation (step 404) of the correct device password, the user computing device 102 only "unlocks" the content protection key. The rest of the user computing device 102 remains locked. The unlocked content protection key allows for the use of the content protection key to decrypt the encrypted fingerprint template (step 410). It is not until the provided fingerprint is determined (step 413) to match the fingerprint template that the rest of the user computing device 102 is unlocked, subject to specific access policies. Such access policies may allow full access to the data and applications on the user computing device 102 to an administrator, but only allow access to a predefined subset of the data and applications on the user computing device 102 to a regular user.

In the embodiment described with reference to FIG. 4, only the device password is used to decrypt the content protection key. Thus, it may be considered that a so-called "two-factor authentication" algorithm is implemented when using the fingerprint template that is stored in the cache, the two factors being: the device password; and the user's fingerprint.

As described with reference to FIG. 3, the smart card password may also be used, by the user computing device 102, to encrypt the content protection key. Accordingly, the steps for retrieving the fingerprint template described with reference to FIG. 4 differ as follows. At step 402, the user computing device 102 prompts the user for both the device password and the smart card password. Accordingly, the user provides both passwords to the user computing device 102.

At step 404, the user computing device 102 forms a hash of the device password, thereby forming a submitted device hash. The user computing device 102 compares the submitted device hash to the stored device hash. Upon receiving the smart card password, either from the user computing device 102 or directly via a suitable user interface on the smart card reader 104, the smart card reader 104 sends the smart card password to the smart card 110. Responsively, the smart card 110 indicates, to the smart card reader 104, whether the correct smart card password has been provided. Provision of the correct smart card password to the smart card 110 also leads to the unlocking of an authentication key on the smart card 110. The smart card reader 104 may use the authentication key to verify that smart card reader 104 is communicating with the specific smart card 110. Provision of the correct smart card password to the smart card 110 may also lead to the unlocking of the private key on the smart card 110. The private key may be used to decrypt the content protection key (see step 408). That is, the user computing device 102 may transmit the encrypted content protection key to the smart card 110 via the smart card reader 104. The smart card 110 may use the private key to decrypt the encrypted content protection key and return the decrypted content protection key to the user computing device 102 via the smart card reader 104.

Alternatively, the user computing device 102 may transmit an encrypted additional key to the smart card 110 via the smart card reader 104. The smart card 110 may use the private key to decrypt the encrypted additional key and return the decrypted additional key to the user computing device 102 via the smart card reader 104. Upon receiving the decrypted additional key, the user computing device 102 may use the decrypted additional key to decrypt the content protection key.

If the user computing device 102 determines (step 405) that the hash of the submitted device password does not match the stored device password hash, then, at step 406, the user computing device 102 advises the user of an error and processing returns to step 402. Similarly, if the smart card 110 is to validate the smart card password, the receipt, from the smart card reader 104, of an indication of failure of the smart card 110 to validate the smart card password causes the user computing device 102 to advise (step 406) the user of an error and return processing to step 402.

If the user computing device 102 determines (step 405) that the hash of the submitted device password matches the stored device password hash and/or determines (step 405) that an indication of success of the smart card 110 in validating the smart card password has been received from the smart card reader 104, processing proceeds to step 408.

At step 408, the user computing device 102 uses both the device password and the smart card password to decrypt the content protection key.

The above embodiment provides so-called "three-factor authentication". In such a case, the three factors are: the device and smart card passwords; the smart card 110; and the user's fingerprint.

It will be appreciated that the method described above provides an enhancement to existing methods, since it is assumed to consume less time to access the fingerprint template from the cache than the time consumed to access the fingerprint template from the smart card 110. However, the method described above can be further enhanced by providing a set of heuristics to occasionally clear the cache so that the information is not stored indefinitely. The heuristics provide a set of rules implemented by a content protection framework of the user computing device 102. The rules can be defined and/or modified by a system administrator or a user of the device 102 so that selected ones of the rules are active. Examples of some possible rules are described as follows.

When the smart card 110 is uncoupled from the smart card reader 104, the user computing device 102 clears the information stored in the cache. Similarly, when the connection between the smart card reader 104 and the user computing device 102 is broken, the user computing device 102 clears the information stored in the cache. This break in communication between the smart card reader 104 and the user computing device 102 may occur, for example, if the smart card reader 104 is physically moved out of communication range of the user computing device 102.

A user definable timer can also be provided to limit the duration for which the information is stored in the cache before being cleared. Depending on the implementation, the timer may or may not reset each time the cache is cleared for another reason. In accordance with one embodiment, a password is needed before allowing a change to be made to the user definable timer. Furthermore, an administration policy can be used to restrict the duration for which the information is stored in the cache. Where the user definable timer and the administration policy define distinct time periods, the user computing device 102 can be configured to select the shortest period among the two time periods.

A memory cleaner may be provided by the user computing device 102 to clear unnecessary information. Accordingly, when the memory cleaner is activated, the user computing device 102 clears the information from the cache. Activation of the memory cleaner, itself, may be triggered by the user computing device 102 determining that any one of a number of different possible triggering events has occurred. The triggering events may be generated by the user. Alternatively, the triggering events may be generated automatically: at predefined time intervals; after a predefined period of inactivity; or upon holstering (for a portable device such as a PDA).

As yet another example, the user computing device 102 may clear the information in the cache after a predefined number of device accesses using the information stored in the cache.

Furthermore, the location of the cache may affect the duration for which the information in the cache is stored. For example, as a default, the information is stored in a cache in a volatile memory, such as Random Access Memory (RAM), of the user computing device 102. Volatile memory requires power to maintain its content. Therefore, during a reset of the user computing device 102 or a removal of the power source of the user computing device 102, such as removing a battery from a PDA, the information stored in the cache is cleared.

Although the previous embodiments have been described with respect to fingerprints, it will be appreciated that other biometric data may be used. Facial recognition, hand geometry, retinal scan, iris scan and voice recognition are just a few example of other biometrics that may be used in addition to, or in lieu of, fingerprints.

The previous embodiments describe a communication link 105 using wireless communication. However, it will be appreciated that wireless reader 108 and the user computing device 102 can be physically connected using a wired communication link such as a USB cable, FireWire and the like.

Further, the previous embodiments describe a combined reader 108 that provides an integrated smart card reader 104 and biometric sensor 106. However, it will be appreciated that the smart card reader 104 and the biometric sensor 106 can be separate devices. In such an embodiment various different combinations of wired and wireless communication between the user computing device 102, the smart card reader 104 and the biometric sensor 106 can be realized depending on the implementation.

Yet further, although the previous embodiments describe storing the biometric template in a cache on the user computing device 102, it will be appreciated that an encrypted biometric template can be stored in a cache on the smart card reader 104. Although storing the biometric template in a cache on the smart card reader 104 would not eliminate the trip from the user computing device 102 to the smart card reader 104 to retrieve the biometric template, it would eliminate the need to access the smart card 110 every time.

In the above description, frequent use has been made of asymmetric cryptography, that is, cryptography that makes use of a pair of keys: one public key, for encryption; and a corresponding private key, for decryption. Symmetric cryptography may also be used, wherein a single, secret key may be used to for both encryption and decryption.

Using the foregoing specification, the embodiments may be implemented as a machine, process or article of manufacture by using standard programming and/or engineering techniques to produce programming software, firmware, hardware or any combination thereof.

Any resulting program(s), having computer-readable program code, may be embodied within one or more computer-usable media such as memory devices or transmitting devices, thereby making a computer program product or article of manufacture according to the invention. As such, the terms "software" and "application" as used herein are intended to encompass a computer program existent (permanently, temporarily, or transitorily) on any computer-usable medium such as on any memory device or in any transmitting device.

Examples of memory devices include hard disk drives, diskettes, optical disks, magnetic tape, semiconductor memories such as FLASH, RAM, ROM, PROMS and the like. Examples of networks include, but are not limited to, the Internet, intranets, telephone/modem-based network communication, hardwired/cabled communication network, cellular communication, radio wave communication, satellite communication and other stationary or mobile network systems/communication links.

The user computing device 102, the smart card reader 104 and the biometric scanner 106 may include one or more processing systems including, for example, central processing unit (CPU), memory/storage devices, communication links, communication/transmitting devices, servers, input/output (I/O) devices, or any subcomponents or individual parts of one or more processing systems, including software, firmware, hardware or any combination or subcombination thereof.

Using the description provided herein, those skilled in the art will be readily able to combine software created as described with appropriate general purpose or special purpose computer hardware to create a computer system and/or computer subcomponents embodying the invention and to create a computer system and/or computer subcomponents for carrying out the method of the invention.

Although preferred embodiments of the invention have been described herein, it will be understood by those skilled in the art that variations may be made thereto without departing from the scope of the appended claims.

## Claims

1. A method of processing a biometric template stored on a smart card (110) for use on a user computing device, said method comprising:
retrieving said biometric template from said smart card (110) using a smart card reader (104);
encrypting (302) said biometric template using a content protection key to form an encrypted biometric template;
encrypting (304) said content protection key to form an encrypted content protection key; and
storing (306), in a cache, said encrypted biometric template and said encrypted content protection key.

2. The method of claim 1 further comprising clearing said cache in accordance with at least one predefined rule.

3. The method of claim 2 further comprising clearing said cache responsive to determining that a triggering event has occurred, where said triggering event comprises a termination of a connection between said smart card reader (104) and said user computing device.

4. The method of claim 2 further comprising clearing said cache responsive to determining that a triggering event has occurred, where said triggering event comprises a termination of a communicable coupling between said smart card (110) and said smart card reader (104).

5. The method of claim 2 further comprising clearing said cache responsive to determining that a triggering event has occurred, where said triggering event comprises an exceeding of a predefined number of cache accesses.

6. The method of claim 2 further comprising clearing said cache responsive to determining that a triggering event has occurred, where said triggering event comprises an exceeding of a predefined duration of time.

7. The method of any one of claims 1 to 6 wherein said biometric template comprises a fingerprint template.

8. The method of any one of claims 1 to 7 further comprising performing said encrypting said content protection key using a device password.

9. The method of any one of claims 1 to 7 further comprising performing said encrypting said content protection key using a smart card password.

10. The method of any one of claims 1 to 7 further comprising performing said encrypting said content protection key by transmitting, to said smart card (110) via said smart card reader (104), said content protection key; and receiving, from said smart card via said smart card reader, said encrypted content protection key.

11. The method of any one of claims 1 to 10 further comprising:
performing said encrypting said content protection key using an additional key;
transmitting, to said smart card (110) via said smart card reader (104), said additional key;
receiving, from said smart card (110) via said smart card reader (104), an encrypted additional key; and
storing, in said cache, said encrypted additional key.

12. The method of any one of claims 1 to 11 further comprising:
generating a hash of said device password; and
storing, in said cache, said hash.

13. A computing device (104) configured to process a biometric template retrieved from a smart card (110), said computing device comprising:
a memory configured to store computer executable instructions; and
a processor configured to execute said computer executable instructions to cause said computing device to implement the steps of the method of any one of claims 1 to 12

14. A computer-readable medium containing computer-executable instructions that, when performed by a processor for processing a biometric template retrieved from a smart card, cause said processor to perform the steps of the method of any one of claims 1 to 12.

## Patentansprüche

1. Verfahren zum Verarbeiten einer biometrischen Vorlage, die auf einer Smartkarte (110) gespeichert ist, zur Verwendung auf einer Benutzercomputervorrichtung, wobei das Verfahren aufweist:
Abrufen der biometrischen Vorlage von der Smartkarte (110) unter Verwendung eines Smartkartelesers (104);
Verschlüsseln (302) der biometrischen Vorlage unter Verwendung eines Inhaltschutzschlüssels, um eine verschlüsselte biometrische Vorlage zu bilden;
Verschlüsseln (304) des Inhaltschutzschlüssels, um einen verschlüsselten Inhaltschutzschlüssel zu bilden; und
Speichern (306) der verschlüsselten biometrischen Vorlage und des verschlüsselten Inhaltschutzschlüssels in einem Cachespeicher.

2. Das Verfahren gemäß Anspruch 1, das weiter aufweist ein Löschen des Cachespeichers in Übereinstimmung mit zumindest einer vordefinierten Regel.

3. Das Verfahren gemäß Anspruch 2, das weiter ein Löschen des Cachespeichers aufweist in Reaktion auf ein Bestimmen, dass ein Auslöseereignis aufgetreten ist, wobei das Auslöseereignis eine Beendigung einer Verbindung zwischen dem Smartkarteleser (104) und der Benutzercomputervorrichtung aufweist.

4. Das Verfahren gemäß Anspruch 2, das weiter ein Löschen des Cachespeichers aufweist in Reaktion auf ein Bestimmen, dass ein Auslöseereignis aufgetreten ist, wobei das Auslöseereignis eine Beendigung einer kommunizierbaren Kopplung zwischen der Smartkarte (110) und dem Smartkarteleser (104) aufweist.

5. Das Verfahren gemäß Anspruch 2, das weiter ein Löschen des Cachespeichers aufweist in Reaktion auf ein Bestimmen, dass ein Auslöseereignis aufgetreten ist, wobei das Auslöseereignis ein Überschreiten einer vordefinierten Anzahl von Zugriffen auf den Cachespeicher aufweist.

6. Das Verfahren gemäß Anspruch 2, das weiter ein Löschen des Cachespeichers aufweist in Reaktion auf ein Bestimmen, dass ein Auslöseereignis aufgetreten ist, wobei das Auslöseereignis ein Überschreiten einer vordefinierten Zeitdauer aufweist.

7. Das Verfahren gemäß einem der Ansprüche 1 bis 6, wobei die biometrische Vorlage eine Fingerabdruckvorlage aufweist.

8. Das Verfahren gemäß einem der Ansprüche 1 bis 7, das weiter ein Durchführen des Verschlüsselns des Inhaltschutzschlüssels unter Verwendung eines Vorrichtungspassworts aufweist.

9. Das Verfahren gemäß einem der Ansprüche 1 bis 7, das weiter ein Durchführen des Verschlüsselns des Inhaltschutzschlüssels unter Verwendung eines Smartkarte-Passworts aufweist.

10. Das Verfahren gemäß einem der Ansprüche 1 bis 7, das weiter aufweist ein Durchführen des Verschlüsselns des Inhaltschutzschlüssels durch Senden des Inhaltschutzschlüssels über den Smartkarteleser (104) an die Smartkarte (110); und Empfangen des verschlüsselten Inhaltschutzschlüssels von der Smartkarte über den Smartkarteleser.

11. Das Verfahren gemäß einem der Ansprüche 1 bis 10, das weiter aufweist:
Durchführen des Verschlüsselns des Inhaltschutzschlüssels unter Verwendung eines zusätzlichen Schlüssels;
Senden des zusätzlichen Schlüssels an die Smartkarte (110) über den Smartkarteleser (104);
Empfangen eines verschlüsselten zusätzlichen Schlüssels von der Smartkarte (110) über den Smartkarteleser (104); und
Speichern des verschlüsselten zusätzlichen Schlüssels in dem Cachespeicher.

12. Das Verfahren gemäß einem der Ansprüche 1 bis 11, das weiter aufweist:
Erzeugen eines Hashs des Vorrichtungspassworts; und
Speichern des Hashs in dem Cachespeicher.

13. Computervorrichtung (104), die konfiguriert ist zum Verarbeiten einer biometrischen Vorlage, die von einer Smartkarte (110) abgerufen wird, wobei die Computervorrichtung aufweist:
einen Speicher, der konfiguriert ist zum Speichern von computerausführbaren Anweisungen; und
einen Prozessor, der konfiguriert ist zum Ausführen der computerausführbaren Anweisungen, um die Computervorrichtung zu veranlassen, die Schritte des Verfahrens gemäß einem der Ansprüche 1 bis 12 zu implementieren.

14. Computerlesbares Medium, das computerausführbare Anweisungen enthält, die bei Durchführung durch einen Prozessor zum Verarbeiten einer biometrischen Vorlage, die von einer Smartkarte abgerufen wird, den Prozessor veranlassen, die Schritte des Verfahrens gemäß einem der Ansprüche 1 bis 12 durchzuführen.

## Revendications

1. Procédé de traitement d'un modèle biométrique stocké sur une carte à puce (110) pour une utilisation sur un dispositif informatique d'utilisateur, ledit procédé comprenant le fait :
d'extraire ledit modèle biométrique de ladite carte à puce (110) en utilisant un lecteur de carte à puce (104) ;
de chiffrer (302) ledit modèle biométrique en utilisant une clé de protection de contenu pour former un modèle biométrique chiffré ;
de chiffrer (304) ladite clé de protection de contenu pour former une clé de protection de contenu chiffrée ; et
de stocker (306), dans une antémémoire, ledit modèle biométrique chiffré et ladite clé de protection de contenu chiffrée.

2. Procédé de la revendication 1, comprenant en outre le fait de vider ladite antémémoire selon au moins une règle prédéfinie.

3. Procédé de la revendication 2, comprenant en outre le fait de vider ladite antémémoire en réponse à la détermination qu'un événement de déclenchement s'est produit, où ledit événement de déclenchement comprend une fin d'une connexion entre ledit lecteur de carte à puce (104) et ledit dispositif informatique d'utilisateur.

4. Procédé de la revendication 2, comprenant en outre le fait de vider ladite antémémoire en réponse à la détermination qu'un événement de déclenchement s'est produit, où ledit événement de déclenchement comprend une fin d'un couplage de communication entre ladite carte à puce (110) et ledit lecteur de carte à puce (104).

5. Procédé de la revendication 2, comprenant en outre le fait de vider ladite antémémoire en réponse à la détermination qu'un événement de déclenchement s'est produit, où ledit événement de déclenchement comprend un dépassement d'un nombre prédéfini d'accès à l'antémémoire.

6. Procédé de la revendication 2, comprenant en outre fait de vider ladite antémémoire en réponse à la détermination qu'un événement de déclenchement s'est produit, où ledit événement de déclenchement comprend un dépassement d'une durée prédéfinie.

7. Procédé de l'une quelconque des revendications 1 à 6, dans lequel ledit modèle biométrique comprend un modèle d'empreinte digitale.

8. Procédé de l'une quelconque des revendications 1 à 7, comprenant en outre le fait d'effectuer ledit chiffrement de ladite clé de protection de contenu en utilisant un mot de passe de dispositif.

9. Procédé de l'une quelconque des revendications 1 à 7, comprenant en outre en le fait d'effectuer ledit chiffrement de ladite clé de protection de contenu en utilisant un mot de passe de carte à puce.

10. Procédé de l'une quelconque des revendications 1 à 7, comprenant en outre le fait d'effectuer ledit chiffrement de ladite clé de protection de contenu par la transmission, à ladite carte à puce (110) via ledit lecteur de carte à puce (104), de ladite clé de protection de contenu ; et la réception, à partir de ladite carte à puce via ledit lecteur de carte à puce, de ladite clé de protection de contenu chiffrée.

11. Procédé de l'une quelconque des revendications 1 à 10, comprenant en outre le fait :
d'effectuer ledit chiffrement de ladite clé de protection de contenu en utilisant une clé supplémentaire ;
de transmettre, à ladite carte à puce (110) via ledit lecteur de carte à puce (104), ladite clé supplémentaire ;
de recevoir, à partir de ladite carte à puce (110) via ledit lecteur de carte à puce (104), une clé supplémentaire chiffrée ; et
de stocker, dans ladite antémémoire, ladite clé supplémentaire chiffrée.

12. Procédé de l'une quelconque des revendications 1 à 11, comprenant en outre le fait :
de générer un condensé numérique dudit mot de passe de dispositif ;
de stocker, dans ladite antémémoire, ledit condensé numérique.

13. Dispositif informatique (104) configuré pour traiter un modèle biométrique extrait d'une carte à puce (110), ledit dispositif informatique comprenant :
une mémoire configurée pour stocker des instructions exécutables par ordinateur ; et
un processeur configuré pour exécuter lesdites instructions exécutables par ordinateur pour amener ledit dispositif informatique à mettre en oeuvre les étapes du procédé de l'une quelconque des revendications 1 à 12.

14. Support lisible par ordinateur contenant des instructions exécutables par ordinateur qui, lorsqu'elles sont effectuées par un processeur pour le traitement d'un modèle biométrique extrait d'une carte à puce, amènent ledit processeur à effectuer les étapes du procédé de l'une quelconque des revendications 1 à 12.
